# EUROPEAN PATENT APPLICATION

(11) **EP 4 727 199 A1**
(43) Date of publication of application: **15.04.2026**
(21) Application number: 24830178.0
(22) Date of filing: 09.05.2024
(51) Int. Cl.: H04W 24/02

(54) **METHOD AND APPARATUS FOR IMPLEMENTING WIRELESS COMMUNICATION ALGORITHM, AND COMPUTER-READABLE MEDIUM**

(30) Priority: 27.06.2023 CN 202310770500
(71) Applicant: Sanechips Technology Co., Ltd., Shenzhen, Guangdong 518055 (CN)
(72) Inventor: QIAN, Kun, Shenzhen, Guangdong 518055 (CN); TONG, Xing, Shenzhen, Guangdong 518055 (CN)
(74) Representative: Canzler & Bergmeier Patentanwälte Partnerschaft mbB
(86) International application number: PCT/CN2024/091885
(87) International publication number: WO 2025/001530

(57) **Abstract**

Provided in the present application are a method and apparatus for implementing a wireless communication algorithm, and a computer-readable medium. The apparatus for implementing a wireless communication algorithm comprises: an algorithm implementation module, the algorithm implementation module comprising a central processing unit, a crossbar switch and operator units. The operator units implement a corresponding data processing algorithm by means of hardware. The central processing unit is configured to: read microcode configuration information corresponding to the wireless communication algorithm, the microcode configuration information comprising hardware connection configuration information and hardware unit configuration information; according to the hardware connection configuration information, control the crossbar switch to connect the operator units into a combined operator unit; and, according to the hardware unit configuration information, configure the operator units in the combined operator unit, such that the combined operator unit can implement the corresponding data processing algorithm. The combined operator unit is configured to, according to the configuration of the combined operator unit, acquire data to be processed and perform corresponding data processing to obtain output data.

## Description

### CROSS REFERENCE TO RELATED APPLICATIONS

The present disclosure claims the priority to Chinese Patent Application No. 202310770500.2 filed with the CNIPA on June 27, 2023, the contents of which are incorporated herein by reference in their entirety.

### TECHNICAL FIELD

Embodiments of the present disclosure relate to, but are not limited to, the technical field of communications.

### BACKGROUND

Generally, in order to implement wireless communication between a base station and a terminal with high quality, several processes including cell search, cell measurement, cell residence, cell reconnection, random access, channel estimation, channel feedback, multiple-input multiple-output, and coding and decoding are needed. Implementation methods for algorithms used in these processes share similarities as well as differences. The current implementation methods cannot balance flexibility and power consumption of the algorithms.

### SUMMARY

The embodiments of the present disclosure provide a method and apparatus for implementing a wireless communication algorithm and a computer-readable medium.

In a first aspect, an embodiment of the present disclosure provides an apparatus for implementing a wireless communication algorithm, including: at least one algorithm implementation module; wherein the algorithm implementation module includes: at least one central processing unit, a crossbar switch, and at least one operator unit; wherein the at least one operator unit implements a corresponding data processing algorithm by hardware; wherein the central processing unit is configured to: read microcode configuration information corresponding to a wireless communication algorithm, with the microcode configuration information including hardware connection configuration information and hardware unit configuration information, control the crossbar switch to connect part or all of operator units into a combined operator unit based on the hardware connection configuration information, and configure the operator units in the combined operator unit based on the hardware unit configuration information to enable the combined operator unit to implement corresponding data processing algorithms; and the combined operator unit is configured to: acquire data to be processed and perform corresponding data processing to obtain output data based on the configuration of the combined operator unit.

In a second aspect, an embodiment of the present disclosure provides a method for implementing a wireless communication algorithm, including: reading microcode configuration information corresponding to a wireless communication algorithm, with the microcode configuration information including hardware connection configuration information and hardware unit configuration information; controlling part or all of operator units to be connected into a combined operator unit through a crossbar switch based on the hardware connection configuration information; configuring the operator units in the combined operator unit based on the hardware unit configuration information to enable the combined operator unit to implement corresponding data processing algorithms, with the operator units implementing the corresponding data processing algorithms by hardware; and based on the configuration of the combined operator unit, acquiring data to be processed and performing corresponding data processing to obtain output data by the combined operator unit.

In a third aspect, an embodiment of the present disclosure provides a computer-readable medium having stored therein a computer program which, when executed by a processor, implements the method for implementing a wireless communication algorithm described herein.

### BRIEF DESCRIPTION OF DRAWINGS

FIG. 1 is a block diagram of an apparatus for implementing a wireless communication algorithm according to an embodiment of the present disclosure;
FIG. 2 is a flowchart illustrating a method for implementing a wireless communication algorithm according to another embodiment of the present disclosure;
FIG. 3 is a block diagram of an apparatus for implementing a wireless communication algorithm according to Example 1 in an embodiment of the present disclosure; and
FIG. 4 is a block diagram of an apparatus for implementing a wireless communication algorithm according to Example 2 in an embodiment of the present disclosure.

### DETAIL DESCRIPTION OF EMBODIMENTS

In order to enable those of ordinary skill in the art to better understand the technical solutions of the present disclosure, a method and apparatus for implementing a wireless communication algorithm and a computer-readable medium provided in the present disclosure are described in detail below with reference to the drawings.

Exemplary embodiments will be described more fully below with reference to the drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and the features therein can be combined with one another if no conflict is incurred.

The term "and/or" used herein includes any and all combinations of at least one associated listed item.

The terms used herein are merely used to describe specific embodiments, and are not intended to limit the present disclosure. As used herein, "a" and "the" which indicate a singular form are intended to include a plural form, unless expressly stated in the context. It should be further understood that the term "include" and/or the term "be made of" used herein indicates the presence of the described features, integers, operations, elements and/or components, but do not exclude the presence or addition of at least one other feature, integer, operation, element, component and/or combinations thereof.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

At present, there are three ways to implement a wireless communication algorithm: implementing by pure hardware, implementing by pure software, and implementing by combination of software and hardware. When implementing by pure hardware, each calculation of an algorithm is implemented by hardware hardening, resource sharing may exist between hardware components; and the way of implementing by pure hardware has poor flexibility and cannot adjust the implementation of the algorithm based on actual situations. The way of implementing by pure software adopts programmable hardware such as a central processing unit and a data processing unit to implement each algorithm, resulting in high power consumption and low speed. When implementing by combination of software and hardware, some algorithms are implemented by hardware, and others are implemented by software, so that advantages of the way of implementing by pure hardware and the way of implementing by pure software are combined; however, poor flexibility still exists when implementing by hardware, and high power consumption still exists when implementing by software. Therefore, the way of implementing by combination of software and hardware cannot balance flexibility and power consumption.

An apparatus for implementing a wireless communication algorithm according to the embodiments of the present disclosure may be included in a wireless communication device, which may be a terminal, for example.

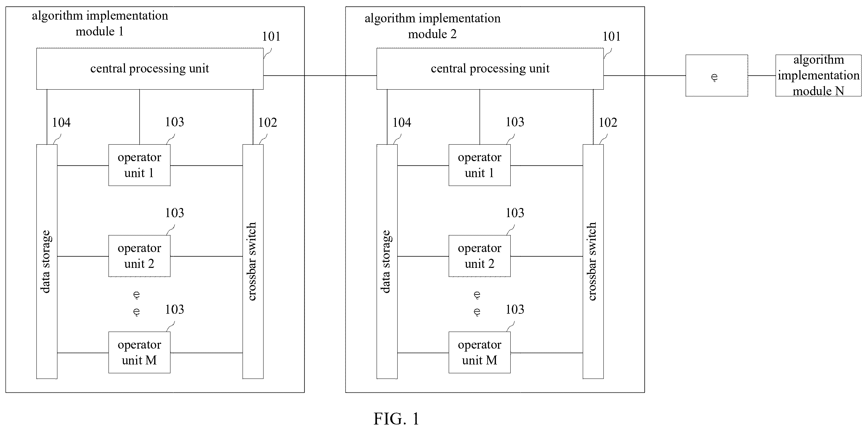

FIG. 1 is a block diagram of an apparatus for implementing a wireless communication algorithm according to an embodiment of the present disclosure.

In a first aspect, referring to FIG. 1, an embodiment of the present disclosure provides an apparatus for implementing a wireless communication algorithm, including: at least one algorithm implementation module.

The algorithm implementation module includes: at least one central processing unit 101, a crossbar switch 102, and at least one operator unit 103 that implements a corresponding data processing algorithm by hardware.

The central processing unit 101 is configured to: read microcode configuration information corresponding to a wireless communication algorithm, with the microcode configuration information including hardware connection configuration information and hardware unit configuration information; control the crossbar switch to connect part or all of operator units into a combined operator unit based on the hardware connection configuration information; and configure the operator units in the combined operator unit based on the hardware unit configuration information to enable the combined operator unit to implement the corresponding data processing algorithms.

The combined operator unit is configured to: acquire data to be processed based on the configuration of the combined operator unit, and perform corresponding processing to obtain output data.

In some exemplary embodiments, in a case where the apparatus for implementing a wireless communication algorithm includes two or more algorithm implementation modules, the two or more algorithm implementation modules are connected in sequence.

In some exemplary embodiments, the operator unit 103 may be referred to as a general purpose processor, a special purpose accelerator, or a vector processor.

In some exemplary embodiments, the central processing unit 101 may be a Central Processing Unit (CPU) or a Digital Signal Processor (DSP).

In some exemplary embodiments, the wireless communication algorithm may be any one of: a cell search algorithm, a cell measurement algorithm, a cell residence algorithm, a cell reconnection algorithm, a random access algorithm, a channel estimation algorithm, a channel feedback algorithm, a multiple-input multiple-output algorithm, a multiple-input multiple-output detection algorithm, a coding algorithm, a decoding algorithm, a modulation algorithm, a carrier aggregation algorithm, or the like.

In some exemplary embodiments, the cell search algorithm includes the following data processing processes: blind detection of a primary synchronization signal, blind detection of a secondary synchronization signal, coarse/fine frequency offset estimation, blind detection of a demodulation reference signal, determination of received signal strength in a cell, calculation of received power of a reference signal, calculation of a strength indication, calculation of receiving quality, calculation of a signal-to-noise ratio, and the like.

In some exemplary embodiments, the data processing algorithm capable of being implemented by the operator unit may include any one of: a correlation algorithm, a Fourier transform algorithm, an inverse Fourier transform algorithm, a descrambling algorithm, a zero-padding algorithm, an equalization algorithm, or the like.

In some exemplary embodiments, the data processing algorithms implemented by the combined operator unit include: the data processing algorithms implemented by all the operator units included in the combined operator unit, with the data processing algorithm implemented by the operator unit including the data processing algorithm implemented by the operator unit each time the operator unit is called. For example, a certain combined operator unit includes an operator unit 1 configured to implement a data processing algorithm 1, an operator unit 2 configured to implement a data processing algorithm 2, and an operator unit 3 configured to implement a data processing algorithm 3, then the data processing algorithms implemented by the combined operator unit include: the data processing algorithm 1, the data processing algorithm 2, and the data processing algorithm 3. If the operator unit 2 is called twice, the data processing algorithms implemented by the combined operator unit include: the data processing algorithm 1, two data processing algorithms 2, and the data processing algorithm 3.

In some exemplary embodiments, the operator units included in the combined operator unit may be completely different; alternatively, some of the operator units included in the combined operator unit may be the same, while the others are different. A plurality of same operator units may implement a same data processing algorithm or implement different data processing algorithms.

In some exemplary embodiments, an execution order of the operator units included in the combined operator unit is determined by a connection relationship between the operator units. For example, if a data output interface of the operator unit 1 is connected to a data input interface of the operator unit 2, the operator unit 1 is executed before the operator unit 2 is executed.

In some exemplary embodiments, when the combined operator unit processes the data to be processed, the number of calls to a same operator unit may be one, or may be two or more.

When a same operator unit is called for a plurality of times, the data processing algorithms implemented during the different calls may be the same or different.

In some exemplary embodiments, the operator unit may include at least one data input interface and at least one data output interface.

For example, a data output interface 1 of the operator unit 2 is connected to a data input interface of the operator unit 1, a data output interface of the operator unit 1 is connected to a data input interface of the operator unit 2, and a data output interface 2 of the operator unit 2 is connected to a data input interface of the operator unit 3, then the combined operator unit includes: the operator unit 1, the operator unit 2, and the operator unit 3, and the execution order of the three operator units is the operator unit 2-the operator unit 1-the operator unit 2-the operator unit 3. That is, the operator unit 1 and the operator unit 3 are called once, and the operator unit 2 is called twice.

In some exemplary embodiments, the microcode configuration information corresponding to the wireless communication algorithm includes one or more pieces of microcode configuration information, and each piece of microcode configuration information enables implementation of at least one data processing process in the wireless communication algorithm. The data processing process implemented based on one piece of the microcode configuration information may be configured based on actual needs.

In some exemplary embodiments, each algorithm implementation module may read one piece of microcode configuration information at a time for performing corresponding configuration and data processing. Then, if the apparatus for implementing a wireless communication algorithm includes merely one algorithm implementation module and the wireless communication algorithm includes A pieces of microcode configuration information, with A being greater than or equal to 2, then the algorithm implementation module is desired to sequentially read the A pieces of microcode configuration information to perform corresponding data processing, that is, the algorithm implementation module is desired to execute for A times to fully implement the wireless communication algorithm. If the apparatus for implementing a wireless communication algorithm includes A algorithm implementation modules and the wireless communication algorithm includes A pieces of microcode configuration information, then the wireless communication algorithm may be fully implemented by each algorithm implementation module reading just one piece of microcode configuration information.

In some exemplary embodiments, the algorithm implementation module further includes a data storage 104, and the central processing unit 101 is further configured to: control the data storage to be connected to the operator units in the combined operator unit based on the hardware connection configuration information; and configure the data storage connected to the operator units in the combined operator unit based on the hardware unit configuration information.

The combined operator unit may be configured to: based on the configuration of the combined operator unit and the configuration of the data storage, read the data to be processed from the data storage connected to a first operator unit in the combined operator unit, perform corresponding data processing to obtain the output data, and store the output data in the data storage connected to a last operator unit in the combined operator unit.

In some exemplary embodiments, the hardware connection configuration information includes: connection information of different data input interfaces and different data output interfaces of the different operator units.

In some exemplary embodiments, the hardware connection configuration information further includes: connection information of the operator units and the data storage.

In some exemplary embodiments, the hardware unit configuration information includes: configuration information of the operator units in the combined operator unit.

In some exemplary embodiments, the configuration information of the operator units in the combined operator unit further includes: the number of calls to the operator units, whether the data processing algorithms implemented during different calls of the operator units are the same, the data processing algorithm implemented each time the operator unit is called, and parameters in the data processing algorithm implemented each time the operator unit is called.

In some exemplary embodiments, the hardware unit configuration information includes: configuration information of the data storage connected to the operator units in the combined operator unit.

In some exemplary embodiments, the configuration information of the data storage connected to the operator units in the combined operator unit includes: the number of times of data reading, the number of times of data storage, an address for each time of data reading, an address for each time of data storage, a length of data read each time, and a length of data stored each time.

In some exemplary embodiments, the configuration information of the data storage connected to the operator units in the combined operator unit includes: the number of times of data reading, an address for each time of data reading, and a length of data read each time.

In some exemplary embodiments, the configuration information of the data storage connected to the operator units in the combined operator unit includes: the number of times of data storage, an address for each time of data storage, and a length of data stored each time.

In some exemplary embodiments, when the combined operator unit acquires the data to be processed and performs corresponding data processing to obtain the output data, the data to be processed is sequentially subjected to corresponding data processing based on the connection relationship between the operator units in the combined operator unit, the operator units after being configured based on the corresponding configuration information are capable of implementing the corresponding data processing algorithms, and an operator unit adopts the corresponding data processing algorithm to perform corresponding data processing on data output by a previous operator unit. If a same operator unit is called for a plurality of times, the same operator unit needs to be configured for a plurality of times for implementing the corresponding data processing algorithm.

In some exemplary embodiments, the data storage connected to the operator units in the combined operator unit may be configured based on the configuration information of the data storage connected to the operator units in the combined operator unit, so that at least one of the data to be processed, intermediate data obtained by processing the data to be processed, or the output data may be stored in the corresponding data storage in a process of acquiring the data to be processed and performing corresponding data processing to obtain the output data by the combined operator unit.

In some exemplary embodiments, the central processing unit is further configured to: determine whether unprocessed microcode configuration information exists in the microcode configuration information corresponding to the wireless communication algorithm; and in the presence of the unprocessed microcode configuration information, continuously perform an operation of reading a next piece of microcode configuration information until all pieces of microcode configuration information in the microcode configuration information corresponding to the wireless communication algorithm are processed.

In some exemplary embodiments, different algorithm implementation modules share a same central processing unit; alternatively, the different algorithm implementation modules have different central processing units.

In some exemplary embodiments, different algorithm implementation modules share a same data storage; alternatively, the different algorithm implementation modules have different data storages.

In some exemplary embodiments, the output data of an i^{th} algorithm implementation module is the data to be processed by a (i+1)^{th} algorithm implementation module, with i being any integer between 1 and N, and N being the number of algorithm implementation modules.

In some exemplary embodiments, the central processing unit 101 is further configured to: generate the microcode configuration information corresponding to the wireless communication algorithm; and store the microcode configuration information corresponding to the wireless communication algorithm in a microcode storage.

The apparatus for implementing a wireless communication algorithm further includes: a microcode storage, which is configured to store the microcode configuration information corresponding to the wireless communication algorithm.

In some exemplary embodiments, the microcode storage and the data storage 104 may be a same storage or may be different storages.

The apparatus for implementing a wireless communication algorithm implements the corresponding wireless communication algorithm through arbitrary combination of the operator units, and the operator units implement the corresponding data processing algorithms by hardware, so that flexibility is improved, data processing efficiency is increased, and power consumption is reduced.

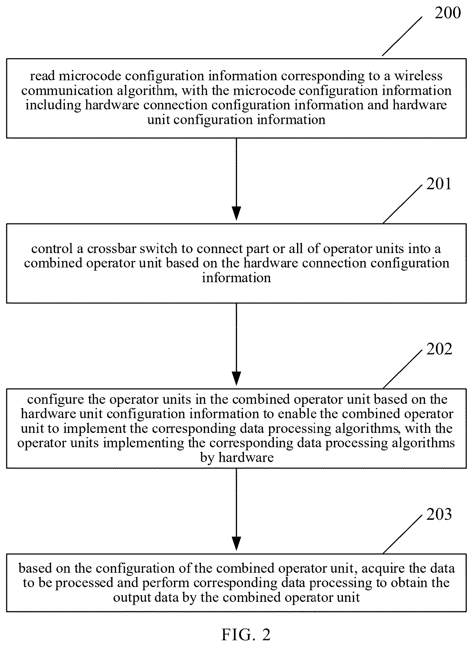

FIG. 2 is a flowchart illustrating a method for implementing a wireless communication algorithm according to another embodiment of the present disclosure.

In a second aspect, referring to FIG. 2, another embodiment of the present disclosure provides a method for implementing a wireless communication algorithm, and the method is executable by a wireless communication device, which may be a terminal, for example. The method may include operations 200 to 203.

At operation 200, microcode configuration information corresponding to a wireless communication algorithm is read, with the microcode configuration information including hardware connection configuration information and hardware unit configuration information.

In some exemplary embodiments, the wireless communication algorithm may be any one of: a cell search algorithm, a cell measurement algorithm, a cell residence algorithm, a cell reconnection algorithm, a random access algorithm, a channel estimation algorithm, a channel feedback algorithm, a multiple-input multiple-output algorithm, a multiple-input multiple-output detection algorithm, a coding algorithm, a decoding algorithm, a modulation algorithm, a carrier aggregation algorithm, or the like.

In some exemplary embodiments, the cell search algorithm includes the following data processing processes: blind detection of a primary synchronization signal, blind detection of a secondary synchronization signal, coarse/fine frequency offset estimation, blind detection of a demodulation reference signal, determination of received signal strength in a cell, calculation of received power of a reference signal, calculation of a strength indication, calculation of receiving quality, calculation of a signal-to-noise ratio, and the like.

In some exemplary embodiments, a data processing algorithm capable of being implemented by an operator unit may include any one of: a correlation algorithm, a Fourier transform algorithm, an inverse Fourier transform algorithm, a descrambling algorithm, a zero-padding algorithm, an equalization algorithm, or the like.

At operation 201, a crossbar switch is controlled to connect part or all of operator units into a combined operator unit based on the hardware connection configuration information

In some exemplary embodiments, an operator unit 103 may be referred to as a general purpose processor, a special purpose accelerator, or a vector processor.

In some exemplary embodiments, the hardware connection configuration information includes: connection information of different data input interfaces and different data output interfaces of the different operator units.

In some exemplary embodiments, the hardware connection configuration information further includes: connection information of the operator units and a data storage.

In some exemplary embodiments, the hardware unit configuration information includes: configuration information of the operator units in the combined operator unit.

In some exemplary embodiments, the configuration information of the operator units in the combined operator unit further includes: the number of calls to the operator units, whether the data processing algorithms implemented during different calls of the operator units are the same, the data processing algorithm implemented each time the operator unit is called, and parameters in the data processing algorithm implemented each time the operator unit is called.

In some exemplary embodiments, the hardware unit configuration information includes: configuration information of the data storage connected to the operator units in the combined operator unit.

In some exemplary embodiments, the configuration information of the data storage connected to the operator units in the combined operator unit includes: the number of times of data reading, the number of times of data storage, an address for each time of data reading, an address for each time of data storage, a length of data read each time, and a length of data stored each time.

In some exemplary embodiments, the configuration information of the data storage connected to the operator units in the combined operator unit includes: the number of times of data reading, an address for each time of data reading, and a length of data read each time.

In some exemplary embodiments, the configuration information of the data storage connected to the operator units in the combined operator unit includes: the number of times of data storage, an address for each time of data storage, and a length of data stored each time.

In some exemplary embodiments, when the combined operator unit acquires data to be processed and performs corresponding data processing to obtain output data, the data to be processed is sequentially subjected to corresponding data processing based on a connection relationship between the operator units in the combined operator unit, the operator units after being configured based on the corresponding configuration information are capable of implementing the corresponding data processing algorithms, and an operator unit adopts the corresponding data processing algorithm to perform corresponding data processing on data output by a previous operator unit. If a same operator unit is called for a plurality of times, the same operator unit needs to be configured for a plurality of times for implementing the corresponding data processing algorithm.

In some exemplary embodiments, the data storage connected to the operator units in the combined operator unit may be configured based on the configuration information of the data storage connected to the operator units in the combined operator unit, so that at least one of the data to be processed, intermediate data obtained by processing the data to be processed, or the output data may be stored in the corresponding data storage in a process of acquiring the data to be processed and performing corresponding data processing to obtain the output data by the combined operator unit.

At operation 202, the operator units in the combined operator unit are configured based on the hardware unit configuration information to enable the combined operator unit to implement the corresponding data processing algorithms, with the operator units implementing the corresponding data processing algorithms by hardware.

In some exemplary embodiments, the data processing algorithms implemented by the combined operator unit include: the data processing algorithms implemented by all the operator units included in the combined operator unit, with the data processing algorithm implemented by the operator unit including the data processing algorithm implemented by the operator unit each time the operator unit is called. For example, a certain combined operator unit includes an operator unit 1 configured to implement a data processing algorithm 1, an operator unit 2 configured to implement a data processing algorithm 2, and an operator unit 3 configured to implement a data processing algorithm 3, then the data processing algorithms implemented by the combined operator unit include: the data processing algorithm 1, the data processing algorithm 2, and the data processing algorithm 3. If the operator unit 2 is called twice, the data processing algorithms implemented by the combined operator unit include: the data processing algorithm 1, two data processing algorithms 2, and the data processing algorithm 3.

In some exemplary embodiments, the operator units included in the combined operator unit may be completely different; alternatively, some of the operator units included in the combined operator unit may be the same, while the others are different. A plurality of same operator units may implement a same data processing algorithm or implement different data processing algorithms.

In some exemplary embodiments, an execution order of the operator units included in the combined operator unit is determined by the connection relationship between the operator units. For example, if a data output interface of the operator unit 1 is connected to a data input interface of the operator unit 2, the operator unit 1 is executed before the operator unit 2 is executed.

In some exemplary embodiments, when the combined operator unit processes the data to be processed, the number of calls to a same operator unit may be one, or may be two or more.

When a same operator unit is called for a plurality of times, the data processing algorithms implemented during the different calls may be the same or different.

In some exemplary embodiments, the operator unit may include at least one data input interface and at least one data output interface.

For example, a data output interface 1 of the operator unit 2 is connected to a data input interface of the operator unit 1, a data output interface of the operator unit 1 is connected to a data input interface of the operator unit 2, and a data output interface 2 of the operator unit 2 is connected to a data input interface of the operator unit 3, then the combined operator unit includes: the operator unit 1, the operator unit 2, and the operator unit 3, and the execution order of the three operator units is the operator unit 2-the operator unit 1-the operator unit 2-the operator unit 3. That is, the operator unit 1 and the operator unit 3 are called once, and the operator unit 2 is called twice.

In some example embodiments, the microcode configuration information corresponding to the wireless communication algorithm includes one or more pieces of microcode configuration information, and each piece of microcode configuration information enables implementation of at least one data processing process in the wireless communication algorithm. The data processing process implemented based on one piece of microcode configuration information may be configured based on actual needs.

In some exemplary embodiments, each algorithm implementation module may read one piece of microcode configuration information at a time for performing corresponding configuration and data processing. Then, if an apparatus for implementing a wireless communication algorithm includes merely one algorithm implementation module and the wireless communication algorithm includes A pieces of microcode configuration information, with A being greater than or equal to 2, then the algorithm implementation module is desired to sequentially read the A pieces of microcode configuration information to perform corresponding data processing, that is, the algorithm implementation module is desired to execute for A times to fully implement the wireless communication algorithm. If the apparatus for implementing a wireless communication algorithm includes A algorithm implementation modules and the wireless communication algorithm includes A pieces of microcode configuration information, then the wireless communication algorithm may be fully implemented by each algorithm implementation module reading just one piece of microcode configuration information.

At operation 203, based on the configuration of the combined operator unit, the combined operator unit acquires the data to be processed, and performs corresponding data processing to obtain the output data.

In some exemplary embodiments, before the combined operator unit acquires the data to be processed and performs corresponding data processing to obtain the output data, the method further includes: controlling the data storage to be connected to the operator units in the combined operator unit based on the hardware connection configuration information; and configuring the data storage connected to part or all of the operator units in the combined operator unit based on the hardware unit configuration information.

After the combined operator unit reads the data to be processed from the data storage connected to a first operator unit in the combined operator unit and performs corresponding data processing to obtain the output data based on the configuration of the combined operator unit and the configuration of the data storage, the method further includes: storing, by the combined operator unit, the output data in the data storage connected to a last operator unit in the combined operator unit.

In some exemplary embodiments, the operator units in the combined operator unit perform corresponding data processing based on the configuration of the operator units.

In some exemplary embodiments, based on the configuration of the operator units and the configuration of the data storage connected to the operator units, the operator units in the combined operator unit acquire the data to be processed, and perform corresponding data processing.

In some exemplary embodiments, based on the configuration of the operator units and the configuration of the data storage connected to the operator units, the operator units in the combined operator unit acquire the data to be processed, perform corresponding data processing, and store the processed data in the data storage connected to the operator units.

In some exemplary embodiments, based on the configuration of the operator units and the configuration of the data storage connected to the operator units, the operator units in the combined operator unit acquire the data to be processed, perform corresponding data processing, and store the processed data in the data storage connected to the operator units.

In some exemplary embodiments, after the combined operator unit acquires the data to be processed and performs corresponding data processing to obtain the output data, the method further includes: determining whether unprocessed microcode configuration information exists in the microcode configuration information corresponding to the wireless communication algorithm; and in the presence of the unprocessed microcode configuration information, continuously perform an operation of reading a next piece of microcode configuration information until all pieces of microcode configuration information in the microcode configuration information corresponding to the wireless communication algorithm are processed.

In some exemplary embodiments, before reading the microcode configuration information corresponding to the wireless communication algorithm, the method further includes: generating the microcode configuration information corresponding to the wireless communication algorithm; and storing the microcode configuration information corresponding to the wireless communication algorithm in a microcode storage.

In order to more clearly present the apparatus for implementing a wireless communication algorithm provided in the embodiments of the present disclosure, two examples are listed below for illustration, and the listed examples are not intended to limit the scope of the embodiments of the present disclosure.

### Example 1

The present example describes a process of implementing a secondary synchronization signal blind detection algorithm with the apparatus for implementing a wireless communication algorithm.

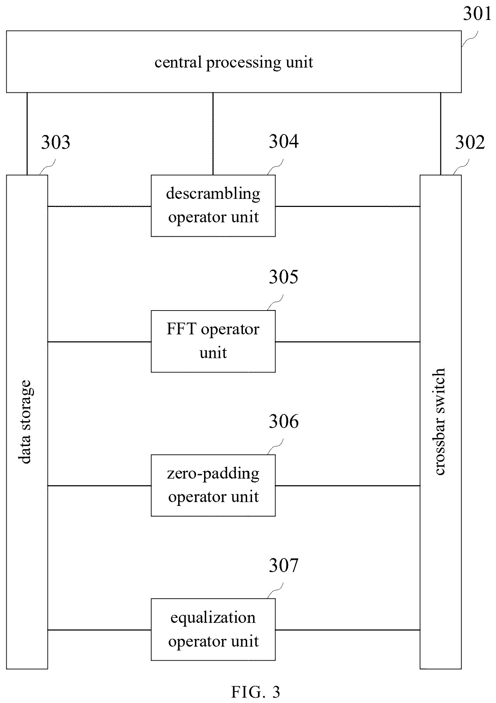

As shown in FIG. 3, the apparatus for implementing a wireless communication algorithm includes: a central processing unit 301, a crossbar switch 302, a data storage 303, a descrambling operator unit 304, a Fast Fourier Transform (FFT) operator unit 305, a zero-padding operator unit 306, and an equalization operator unit 307.

The descrambling operator unit 304 is configured to implement the descrambling algorithm.

The FFT operator unit 305 is configured to implement an FFT algorithm or an Inverse Fast Fourier Transform (IFFT) algorithm.

The zero-padding operator unit 306 is configured to implement a zero-padding algorithm, that is, to pad a middle portion of input data with 0, with a start position and an end position of the middle portion being configurable.

The equalization operator unit 307 is configured to implement the equalization algorithm.

In the present example, the secondary synchronization signal blind detection algorithm includes: a channel estimation process, a channel equalization process, and a blind detection process.

In the channel estimation process, a known primary synchronization signal is used to estimate a channel status; in the channel equalization process, a channel estimation result of the primary synchronization signal is used for equalization on a received secondary synchronization signal; and in the blind detection process, 336 possible secondary synchronization signals are used for descrambling and comparison on the equalized secondary synchronization signal, and several closest secondary synchronization signals are selected and reported to software for decision making.

The secondary synchronization signal blind detection algorithm corresponds to three pieces of microcode configuration information, which are microcode configuration information 1 corresponding to the channel estimation process, microcode configuration information 2 corresponding to the channel equalization process, and microcode configuration information 3 corresponding to the blind detection process, respectively.

The microcode configuration information 1 includes hardware connection configuration information 1 and hardware unit configuration information 1.

The microcode configuration information 2 includes hardware connection configuration information 2 and hardware unit configuration information 2.

The microcode configuration information 3 includes hardware connection configuration information 3 and hardware unit configuration information 3.

The central processing unit 301 reads the microcode configuration information 1, and controls, based on the hardware connection configuration information 1 in the microcode configuration information 1, the crossbar switch 302 to connect a data output interface of the data storage 303 to a data input interface 1 of the FFT operator unit 305, connect a data output interface 1 of the FFT operator unit 305 to a data input interface of the descrambling operator unit 304, connect a data output interface of the descrambling operator unit 304 to a data input interface 2 of the FFT operator unit 305, connect a data output interface 2 of the FFT operator unit 305 to a data input interface of the zero-padding operator unit 306, connect a data output interface of the zero-padding operator unit 306 to a data input interface 3 of the FFT operator unit 305, and connect a data output interface 3 of the FFT operator unit 305 to a data input port of the data storage 303, thereby obtaining a combined operator unit of the data storage 303 -the FFT operator unit 305-the descrambling operator unit 304-the FFT operator unit 305-the zero-padding operator unit 306-the FFT operator unit 305-the data storage 303.

The central processing unit 301 performs corresponding configuration on the data storage 303, the FFT operator unit 305, the descrambling operator unit 304, and the zero-padding operator unit 306 based on the hardware unit configuration information 1.

Based on the configuration of the FFT operator unit 305 and the configuration of the data storage 303, the FFT operator unit 305 reads received data from the data storage 303, and performs corresponding data processing on a primary synchronization signal in the received data.

The descrambling operator unit 304 performs corresponding data processing on data output by the FFT operator unit 305 based on the configuration of the descrambling operator unit 304.

The FFT operator unit 305 performs corresponding data processing on data output by the descrambling operator unit 304 based on the configuration of the FFT operator unit 305.

The zero-padding operator unit 306 performs corresponding data processing on data output by the FFT operator unit 305 based on the configuration of the zero-padding operator unit 306.

The FFT operator unit 305 performs corresponding data processing on data output by the zero-padding operator unit 306 based on the configuration of the FFT operator unit 305.

Based on the configuration of the FFT operator unit 305 and the configuration of the data storage 303, the FFT operator unit 305 stores data output by the FFT operator unit 305, i.e., a channel estimation result, in the data storage 303.

The central processing unit 301 reads the microcode configuration information 2, and controls, based on the hardware connection configuration information 2 in the microcode configuration information 2, the crossbar switch 302 to connect the data output interface of the data storage 303 to the data input interface 1 of the FFT operator unit 305, connect the data output interface 1 of the FFT operator unit 305 to a data input interface of the equalization operator unit 307, and connect a data output interface of the equalization operator unit 307 to the data input port of the data storage 303, thereby obtaining a combined operator unit of the data storage 303 -the FFT operator unit 305-the equalization operator unit 307-the data storage 303.

The central processing unit 301 performs corresponding configuration on the data storage 303, the FFT operator unit 305, and the equalization operator unit 307 based on the hardware unit configuration information 2.

Based on the configuration of the FFT operator unit 305 and the configuration of the data storage 303, the FFT operator unit 305 reads the received data from the data storage 303, and performs corresponding data processing on a secondary synchronization signal in the received data.

The equalization operator unit 307 performs corresponding data processing on data output by the FFT operator unit 305 and the channel estimation result based on the configuration of the equalization operator unit 307.

Based on the configuration of the equalization operator unit 307 and the configuration of the data storage 303, the equalization operator unit 307 stores data output by the equalization operator unit 307, i.e., the equalized secondary synchronization signal, in the data storage 303.

The central processing unit 301 reads the microcode configuration information 3, and controls, based on the hardware connection configuration information 3 in the microcode configuration information 3, the crossbar switch 302 to connect the data output interface of the data storage 303 to the data input interface of the descrambling op erator unit 304 and connect the data output interface of the descrambling operator unit 304 to the data input port of the data storage 303, thereby obtaining a combined operator unit of the data storage 303-the descrambling operator unit 304-the data storage 303.

The central processing unit 301 performs corresponding configuration on the data storage 303 and the descrambling operator unit 304 based on the hardware unit configuration information 3.

Based on the configuration of the descrambling operator unit 304 and the configuration of the data storage 303, the descrambling operator unit 304 reads the equalized secondary synchronization signal from the data storage 303, and performs corresponding data processing on the equalized secondary synchronization signal and one of the possible secondary synchronization signals.

Based on the configuration of the descrambling operator unit 304 and the configuration of the data storage 303, the descrambling operator unit 304 stores data output by the descrambling operator unit 304 in the data storage 303.

The above processes are repeated to obtain output data corresponding to the 336 possible secondary synchronization signals.

The output data corresponding to the 336 possible secondary synchronization signals is reported to software and is sorted by software, and decision making is performed on the output data corresponding to the 336 possible secondary synchronization signals to select one as a blind detection result of the secondary synchronization signal.

### Example 2

The present example describes a process of implementing a secondary synchronization signal blind detection algorithm with the apparatus for implementing a wireless communication algorithm.

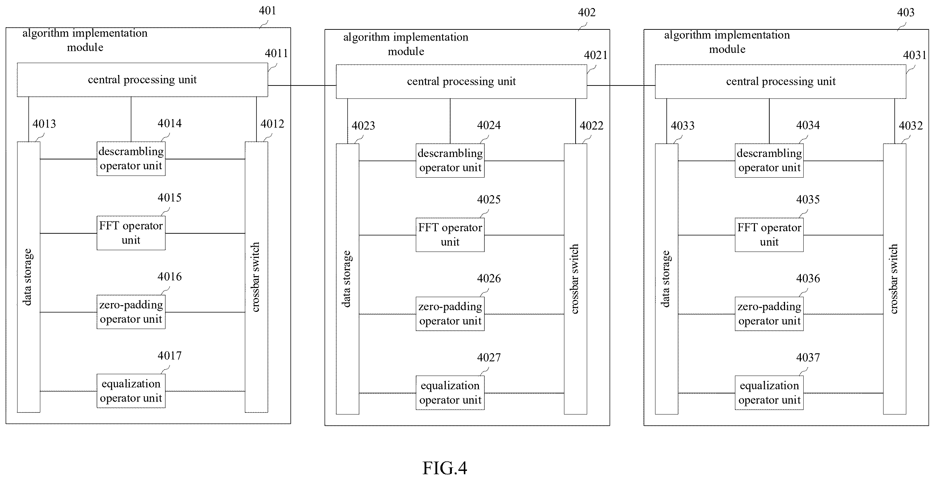

As shown in FIG. 4, the apparatus for implementing a wireless communication algorithm includes: an algorithm implementation module 401, an algorithm implementation module 402, and an algorithm implementation module 403.

The algorithm implementation module 401 includes: a central processing unit 4011, a crossbar switch 4012, a data storage 4013, a descrambling operator unit 4014, an FFT operator unit 4015, a zero-padding operator unit 4016, and an equalization operator unit 4017.

The algorithm implementation module 402 includes: a central processing unit 4021, a crossbar switch 4022, a data storage 4023, a descrambling operator unit 4024, an FFT operator unit 4025, a zero-padding operator unit 4026, and an equalization operator unit 4027.

The algorithm implementation module 403 includes: a central processing unit 4031, a crossbar switch 4032, a data storage 4033, a descrambling operator unit 4034, an FFT operator unit 4035, a zero-padding operator unit 4036, and an equalization operator unit 4037.

The descrambling operator units are configured to implement the descrambling algorithm.

The FFT operator units are configured to implement the FFT algorithm or the IFFT algorithm.

The zero-padding operator units are configured to implement a zero-padding algorithm, that is, to pad a middle portion of input data with 0, with a start position and an end position of the middle portion being configurable.

The equalization operator units are configured to implement the equalization algorithm.

In the present example, the secondary synchronization signal blind detection algorithm includes: a channel estimation process, a channel equalization process, and a blind detection process.

In the channel estimation process, a known primary synchronization signal is used to estimate a channel status; in the channel equalization process, a channel estimation result of the primary synchronization signal is used for equalization on a received secondary synchronization signal; and in the blind detection process, 336 possible secondary synchronization signals are used for descrambling and comparison on the equalized secondary synchronization signal, and several closest secondary synchronization signals are selected and reported to software for decision making.

The secondary synchronization signal blind detection algorithm corresponds to three pieces of microcode configuration information, which are microcode configuration information 1 corresponding to the channel estimation process, microcode configuration information 2 corresponding to the channel equalization process, and microcode configuration information 3 corresponding to the blind detection process, respectively.

The microcode configuration information 1 includes hardware connection configuration information 1 and hardware unit configuration information 1.

The microcode configuration information 2 includes hardware connection configuration information 2 and hardware unit configuration information 2.

The microcode configuration information 3 includes hardware connection configuration information 3 and hardware unit configuration information 3.

The central processing unit 4011 reads the microcode configuration information 1, and controls, based on the hardware connection configuration information 1 in the microcode configuration information 1, the crossbar switch 4012 to connect a data output interface of the data storage 4013 to a data input interface 1 of the FFT operator unit 4015, connect a data output interface 1 of the FFT operator unit 4015 to a data input interface of the descrambling operator unit 4014, connect a data output interface of the descrambling operator unit 4014 to a data input interface 2 of the FFT operator unit 4015, connect a data output interface 2 of the FFT operator unit 4015 to a data input interface of the zero-padding operator unit 4016, connect a data output interface of the zero-padding operator unit 4016 to a data input interface 3 of the FFT operator unit 4015, and connect a data output interface 3 of the FFT operator unit 4015 to a data input port of the data storage 4013, thereby obtaining a combined operator unit of the data storage 4013 -the FFT operator unit 4015-the descrambling operator unit 4014-the FFT operator unit 4015-the zero-padding operator unit 4016-the FFT operator unit 4015-the data storage 4013.

The central processing unit 4011 performs corresponding configuration on the data storage 4013, the FFT operator unit 4015, the descrambling operator unit 4014, and the zero-padding operator unit 4016 based on the hardware unit configuration information 1.

Based on the configuration of the FFT operator unit 4015 and the configuration of the data storage 4013, the FFT operator unit 4015 reads received data from the data storage 4013, and performs corresponding data processing on a primary synchronization signal in the received data.

The descrambling operator unit 4014 performs corresponding data processing on data output by the FFT operator unit 4015 based on the configuration of the descrambling operator unit 4014.

The FFT operator unit 4015 performs corresponding data processing on data output by the descrambling operator unit 4014 based on the configuration of the FFT operator unit 4015.

The zero-padding operator unit 4016 performs corresponding data processing on data output by the FFT operator unit 4015 based on the configuration of the zero-padding operator unit 4016.

The FFT operator unit 4015 performs corresponding data processing on data output by the zero-padding operator unit 4016 based on the configuration of the FFT operator unit 4015.

Based on the configuration of the FFT operator unit 4015 and the configuration of the data storage 4013, the FFT operator unit 4015 stores data output by the FFT operator unit 4015, i.e., a channel estimation result, in the data storage 4013.

The central processing unit 4021 reads the microcode configuration information 2, and controls, based on the hardware connection configuration information 2 in the microcode configuration information 2, the crossbar switch 4022 to connect a data output interface of the data storage 4023 to a data input interface 1 of the FFT operator unit 4025, connect a data output interface 1 of the FFT operator unit 4025 to a data input interface of the equalization operator unit 4027, and connect a data output interface of the equalization operator unit 4027 to a data input port of the data storage 4023, thereby obtaining a combined operator unit of the data storage 4023-the FFT operator unit 4025-the equalization operator unit 4027-the data storage 4023.

The central processing unit 4021 performs corresponding configuration on the data storage 4023, the FFT operator unit 4025, and the equalization operator unit 4027 based on the hardware unit configuration information 2.

Based on the configuration of the FFT operator unit 4025 and the configuration of the data storage 4023, the FFT operator unit 4025 reads received data from the data storage 4023, and performs corresponding data processing on a secondary synchronization signal in the received data.

The equalization operator unit 4027 performs corresponding data processing on data output by the FFT operator unit 4025 and the channel estimation result based on the configuration of the equalization operator unit 4027.

Based on the configuration of the equalization operator unit 4027 and the configuration of the data storage 4023, the equalization operator unit 4027 stores data output by the equalization operator unit 4027, i.e., the equalized secondary synchronization signal, in the data storage 4023.

The central processing unit 4033 reads the microcode configuration information 3, and controls, based on the hardware connection configuration information 3 in the microcode configuration information 3, the crossbar switch 4032 to connect a data output interface of the data storage 4033 to a data input interface of the descrambling operator unit 4034 and connect a data output interface of the descrambling operator unit 4034 to a data input port of the data storage 4033, thereby obtaining a combined operator unit of the data storage 4033-the descrambling operator unit 4034-the data storage 4033.

The central processing unit 4031 performs corresponding configuration on the data storage 4033 and the descrambling operator unit 4034 based on the hardware unit configuration information 3.

Based on the configuration of the descrambling operator unit 4034 and the configuration of the data storage 4033, the descrambling operator unit 4034 reads the equalized secondary synchronization signal from the data storage 4033, and performs corresponding data processing on the equalized secondary synchronization signal and one of the possible secondary synchronization signals.

Based on the configuration of the descrambling operator unit 4034 and the configuration of the data storage 4033, the descrambling operator unit 4034 stores data output by the descrambling operator unit 4034 in the data storage 4033.

The above processes are repeated to obtain output data corresponding to the 336 possible secondary synchronization signals.

The output data corresponding to the 336 possible secondary synchronization signals is reported to software and is sorted by software, and decision making is performed on the output data corresponding to the 336 possible secondary synchronization signals to select one as a blind detection result of the secondary synchronization signal.

In a third aspect, another embodiment of the present disclosure provides a computer-readable medium having stored therein a computer program which, when executed by a processor, implements the method for implementing a wireless communication algorithm described in any of the above embodiments of the present disclosure.

It should be understood by those of ordinary skill in the art that the functional modules/units in all or some of the operations, the systems, and the devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure of the appended claims.

## Claims

1. An apparatus for implementing a wireless communication algorithm, comprising: at least one algorithm implementation module;
wherein each of the at least one algorithm implementation module comprises: at least one central processing unit, a crossbar switch, and at least one operator unit; wherein each of the at least one operator unit implements a corresponding data processing algorithm by hardware;
wherein the central processing unit is configured to:
read microcode configuration information corresponding to a wireless communication algorithm; wherein the microcode configuration information comprises: hardware connection configuration information and hardware unit configuration information;
control the crossbar switch to connect part or all of operator units into a combined operator unit based on the hardware connection configuration information; and
configure the operator units in the combined operator unit based on the hardware unit configuration information to enable the combined operator unit to implement corresponding data processing algorithms; and
the combined operator unit is configured to: acquire data to be processed and perform corresponding data processing to obtain output data based on the configuration of the combined operator unit.

2. The apparatus for implementing a wireless communication algorithm of claim 1, further comprising a data storage, wherein the central processing unit is further configured to:
control the data storage to be connected to the operator units in the combined operator unit based on the hardware connection configuration information; and
configure the data storage connected to the operator units in the combined operator unit based on the hardware unit configuration information; and
the combined operator unit is configured to: based on the configuration of the combined operator unit and the configuration of the data storage, read the data to be processed from the data storage connected to a first operator unit in the combined operator unit, and perform corresponding data processing to obtain the output data; and store the output data in the data storage connected to a last operator unit in the combined operator unit.

3. The apparatus for implementing a wireless communication algorithm of claim 2, wherein different algorithm implementation modules share a same data storage; or
the different algorithm implementation modules have different data storages.

4. The apparatus for implementing a wireless communication algorithm of claim 1, wherein the central processing unit is further configured to:
determine whether unprocessed microcode configuration information exists in the microcode configuration information corresponding to the wireless communication algorithm; and
in the presence of the unprocessed microcode configuration information, continuously perform an operation of reading a next piece of microcode configuration information until all pieces of microcode configuration information in the microcode configuration information corresponding to the wireless communication algorithm are processed.

5. The apparatus for implementing a wireless communication algorithm of any one of claims 1 to 4, wherein different algorithm implementation modules share a same central processing unit; or
the different algorithm implementation modules have different central processing units.

6. The apparatus for implementing a wireless communication algorithm of any one of claims 1 to 4, wherein the output data of an i^{th} algorithm implementation module is the data to be processed by a (i+1)^{th} algorithm implementation module; wherein i is any integer between 1 and N, and N is a number of algorithm implementation modules.

7. A method for implementing a wireless communication algorithm, comprising:
reading microcode configuration information corresponding to a wireless communication algorithm; wherein the microcode configuration information comprises: hardware connection configuration information and hardware unit configuration information;
controlling a crossbar switch to connect part or all of operator units into a combined operator unit based on the hardware connection configuration information;
configuring the operator units in the combined operator unit based on the hardware unit configuration information to enable the combined operator unit to implement corresponding data processing algorithms; wherein the operator units implement the corresponding data processing algorithms by hardware; and
based on the configuration of the combined operator unit, acquiring data to be processed and performing corresponding data processing to obtain output data by the combined operator unit.

8. The method for implementing a wireless communication algorithm of claim 7, wherein before acquiring the data to be processed and performing corresponding data processing to obtain the output data by the combined operator unit based on the configuration of the combined operator unit, the method further comprises:
controlling a data storage to be connected to the operator units in the combined operator unit based on the hardware connection configuration information; and
configuring the data storage connected to the operator units in the combined operator unit based on the hardware unit configuration information; and
acquiring the data to be processed and performing corresponding data processing to obtain the output data by the combined operator unit based on the configuration of the combined operator unit comprises:
based on the configuration of the combined operator unit and the configuration of the data storage, by the combined operator unit, reading the data to be processed from the data storage connected to a first operator unit in the combined operator unit and performing corresponding data processing to obtain the output data, and
storing, by the combined operator unit, the output data in the data storage connected to a last operator unit in the combined operator unit.

9. The method for implementing a wireless communication algorithm of claim 7, wherein after acquiring the data to be processed and performing corresponding data processing to obtain the output data by the combined operator unit based on the configuration of the combined operator unit, the method further comprises:
determining whether unprocessed microcode configuration information exists in the microcode configuration information corresponding to the wireless communication algorithm; and
in the presence of the unprocessed microcode configuration information, continuously perform an operation of reading a next piece of microcode configuration information until all pieces of microcode configuration information in the microcode configuration information corresponding to the wireless communication algorithm are processed.

10. The method for implementing a wireless communication algorithm of any one of claims 7 to 9, wherein before reading the microcode configuration information corresponding to the wireless communication algorithm, the method further comprises:
generating the microcode configuration information corresponding to the wireless communication algorithm; and
storing the microcode configuration information corresponding to the wireless communication algorithm in a microcode storage.

11. A computer-readable medium having stored therein a computer program which, when executed by a processor, implements the method for implementing a wireless communication algorithm of any one of claims 7 to 10.
